# EUROPÄISCHE PATENTSCHRIFT

(11) **EP 1 492 828 B1**
(45) Veröffentlichungstag und Bekanntmachung des Hinweises auf die Patenterteilung: **16.11.2005**
(21) Anmeldenummer: 03727286.1
(22) Anmeldetag: 09.04.2003
(51) Int. Cl.: C08F 220/58, C08F 228/02, C08F 212/14, C08F 226/02, C08F 222/02, C04B 24/16

(54) **WASSERLÖSLICHE COPOLYMERE AUF BASIS VON OLEFINISCHEN SULFONSÄUREN, VERFAHREN ZU DEREN HERSTELLUNG UND IHRE VERWENDUNG**
WATER-SOLUBLE COPOLYMERS BASED ON OLEFINIC SULFONIC ACIDS, METHOD FOR THE PRODUCTION THEREOF AND USE OF THE SAME
COPOLYMERES HYDROSOLUBLES A BASE D'ACIDES SULFONIQUES OLEFINIQUES, LEURS PROCEDES DE PRODUCTION ET LEUR UTILISATION

(30) Priorität: 10.04.2002 DE 10215682
(43) Veröffentlichungstag der Anmeldung: 05.01.2005
(73) Patentinhaber: Degussa Construction Polymers GmbH, 83308 Trostberg (DE)
(72) Erfinder: SPINDLER, Christian, 83512 Wasserburg (DE); PLANK, Johann, 83308 Trostberg (DE); FENCHL, Andrea, 83512 Wasserburg (DE); HUBER, Uwe, 84518 Garching (DE)
(74) Vertreter: Dey, Michael
(86) Internationale Anmeldenummer: PCT/EP2003/003694
(87) Internationale Veröffentlichungsnummer: WO 2003/085013

(56) Entgegenhaltungen:
- EP-A- 0 214 454
- EP-A- 1 112 982

## Beschreibung

Die vorliegende Erfindung betrifft wasserlösliche Copolymere auf Basis von olefinischen Sulfonsäuren, olefinischen Dicarbonsäuren, Vinylamiden sowie Vinyl- und/oder Allylethern, die als Wasserretentionsmittel, Verdickungsmittel oder Antisegregationsmittel in Gips- und Zementmörteln, wie sie z.B. in Form von Putzmörteln Anwendung finden, sowie in Tonsuspensionen eingesetzt werden können.

Zement- und Gipsmörtel werden in der Bauindustrie eingesetzt, um verschiedene keramische Materialien und Oberflächenverkleidungen mit dem Untergrund zu verbinden oder aber Oberflächen zu verkleiden (Putzmörtel). Dabei muss verhindert werden, dass Anmachwasser durch Kapillarkräfte von porösen Untergründen dem Mörtel entzogen wird. Dies gelingt durch den Zusatz von Wasserretentionsmitteln. Diese können entweder durch ihre chemische Struktur (z.B. durch Wasserstoffbrückenbindungen) Wasser an sich binden oder zur Ausbildung eines dichten Filterkuchens des Mörtels auf dem Untergrund führen. So werden z.B. in der EP-A 1 090 889 Mischungen aus Ton und Guar als Wasserretentionsmittel beschrieben. Die Druckschriften DE 195 43 304 A1 und US 5,372,642 offenbaren Cellulosederivate als Wasserretentionsmittel.

Darüber hinaus werden Mörteln oft Stellmittel zugesetzt, um das Abfließen des Mörtels aus auszubessernden Spalten oder von vertikalen Flächen zu vermeiden. Dies wird oft durch den Zusatz von Cellulose- und/oder Stärkederivaten erreicht. So werden gemäß EP-A 773 198 Stellmittel, die zumindest einen Cellulose- und einen Stärkeether enthalten, offenbart. Gemäß EP-A 0 445 653 und DE 195 34 719 A1 werden Stellmittel beschrieben, die neben Cellulosederivaten das Tonmineral Hektorit enthalten. Aus der EP-A 0 630 871 sind Verdickersysteme bekannt, die neben einem Cellulosether mindestens ein ionisches oder nichtionisches Tensid enthalten.

Suspensionen quellbarer Tone werden im Grund- und Erdbau zur Herstellung von erdreichstützenden Flüssigkeiten bei Ausschachtungen eingesetzt. Beispielsweise sei hier der Schlitzwandbau, die Schacht-, Brunnen- und Senkkastenabsenkung erwähnt (siehe auch: F. Weiss, "Die Standfestigkeit flüssigkeitsgestützter Erdwände" in Bauingenieurpraxis 70 (1967)).

Die entsprechend dem Stand der Technik eingesetzten Cellulosederivate besitzen den Nachteil, dass sie das Versteifen der Zementmörtel verzögern. Dies ist jedoch in vielen Fällen unerwünscht, da für die Weiterverarbeitung eine relativ zügige Versteifung des Mörtels besser ist. Aus diesem Grund müssen Zementschlämmen oft noch Beschleuniger zugemischt werden, was jedoch wegen der Notwendigkeit einer exakten Dosierung in der Praxis nicht unproblematisch ist.

Der vorliegenden Erfindung lag daher die Aufgabe zugrunde, wasserlösliche Copolymere bereitzustellen, welche die genannten Nachteile des Standes der Technik nicht aufweisen, sondern technisch einfach herstellbar sind und den entsprechenden Baustoffsystemen gute anwendungstechnische Eigenschaften im Verarbeitungs- und erhärteten Zustand verleihen.

Diese Aufgabe wurde erfindungsgemäß durch die Copolymere entsprechend Anspruch 1 gelöst.

Es hat sich nämlich überraschenderweise gezeigt, dass die erfindungsgemäßen wasserlöslichen Copolymere als Wasserretentionsmittel, Verdickungsmittel oder Antisegregationsmittel eingesetzt werden können, ohne hierbei die Ansteif- und Versteifungszeiten zu verlängern.

Die Copolymere entsprechend der vorliegenden Erfindung bestehen aus mindestens vier Struktureinheiten a), b), c) und d). Die erste Struktureinheit a) leitet sich von olefinischen Sulfonsäuren der Formel (Ia) und/oder (Ib) ab: 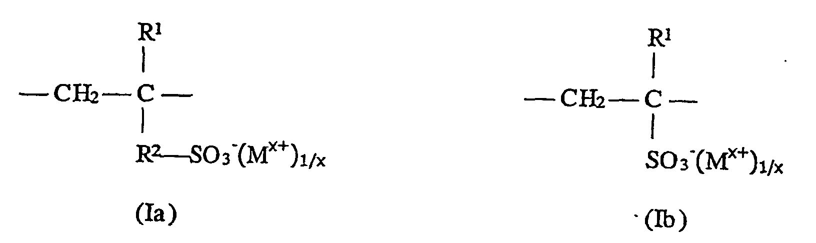 wobei
- R¹ =: Wasserstoff oder C₁-C₅-Alkyl,
- R² =: C₁-C₂₀-Alkylen, Carboxy-C₁-C₂₀-Alkylen, Carboamido-C₁-C₂₀-Alkylen oder Phenylen
- M =: Wasserstoff, Ammonium oder einem ein-, zwei- oder dreiwertigen Metallkation
und
- x =: 1 bis 3
bedeuten.

Als einwertige Metallkationen werden hierbei vorzugsweise Alkali-lonen, insbesondere Natrium- und Kalium-lonen, als zweiwertige Metallkationen Erdalkali-lonen, insbesondere Calcium- und Magnesium-lonen sowie als dreiwertige Kationen Aluminium- oder Eisen-lonen eingesetzt. Gemäß einer bevorzugten Ausführungsform stellen in der Formel (Ia) R¹ = Wasserstoff und R² = -CO-NH-C(CH₃)₂-CH₂- dar.

Die Struktureinheit a) leitet sich von Monomeren wie z.'B. 2-Acrylamido-2-methylpropansulfonsäure, Styrolsulfonsäure, Vinylsulfonsäure und Methallylsulfonsäure bzw. deren Salzen ab. Besonders bevorzugt sind 2-Acrylamido-2-methylpropansulfonsäure sowie deren Salze.

Die zweite Struktureinheit b) entspricht der Formel (IIa) und/oder (IIb): 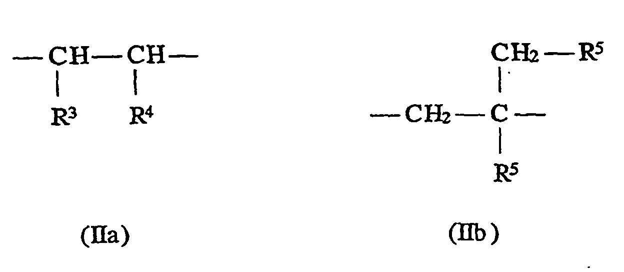 wobei
R³ und R⁴ = -COO⁻(M^{x+})_{1/x} oder zusammen 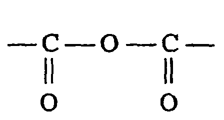 sind
R5 = -COO-(M^{x+})_{1/x}
M = Wasserstoff, Ammonium oder ein ein-, zwei- oder dreiwertiges Metallkation
und
x = 1 bis 3
bedeuten.

Bevorzugt sind als einwertige Metallkationen wiederum Alkalikationen (Na, K), als zweiwertige Metallkationen Erdalkalikationen (Ca, Mg) und als dreiwertige Metallkationen Aluminium- und Eisen-Ionen anzusehen.

Als Monomere, welche die Struktur(en) (IIa) und/oder (IIb) bilden, kommen vorzugsweise Maleinsäure und deren Salze sowie Maleinsäureanhydrid, aber auch Fumarsäure, Itaconsäure oder deren Salze in Frage.

Die dritte Struktureinheit c) entspricht der Formel (III): 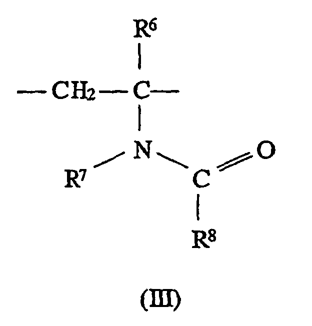 wobei
R⁶ = Wasserstoff oder C₁-C₅-Alkyl
R⁷ und R⁸ = Wasserstoff, C₁-C₁₀-Alkyl oder zusammen -(CH₂)_{y}- sind sowie
y = 3 bis 7, insbesondere 3 bis 5,
bedeuten.

Als Monomere, welche die Struktureinheit c) bilden können, werden vorzugsweise N-Vinylcaprolactam, N-Vinylpyrrolidon, aber auch N-Vinylformamid, N-Vinylacetamid sowie N-Methyl-N-Vinylacetamid verwendet.

Die vierte Struktureinheit d) entspricht der Formel (IVa) und/oder (IVb) und/oder (IVc): 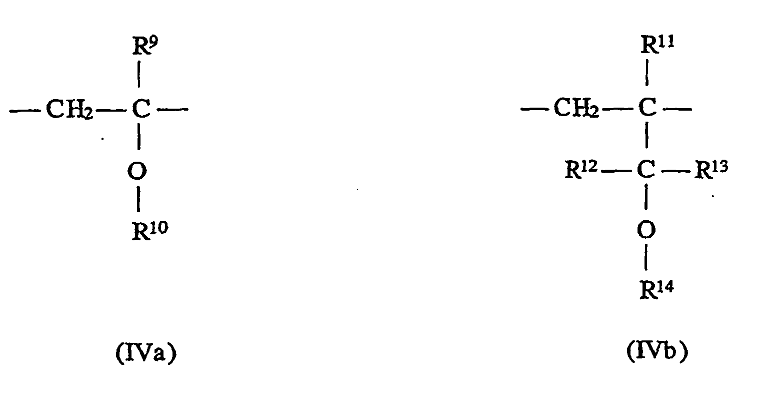 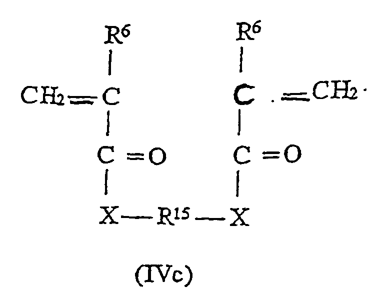 wobei
- R⁹ =: Wasserstoff oder C₁-C₅-Alkyl
- R¹⁰ =: C₁-C₁₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-alkylenoxy (mit 1 bis 400 Alkylenoxy-Einheiten), C₇-C₂₀-Alkylaryl, C₇-C₂₀-Hydroxyalkylaryl, C₆-C₁₀-Aryl, C₆-C₁₀-Hydroxyaryl
- R¹, R¹² und R¹³ =: Wasserstoff oder C₁-C₅-Alkyl und
- R¹⁴ =: Wasserstoff, C₁-C₂₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃ Alkylenoxy (mit 1 bis 400 Alkylenoxy-Einheiten), C₇-C₂₀-Alkylaryl, C₇-C₂₀-Hydroxyalkylaryl, C₆-C₁₀-Aryl, C₆-C₁₀-Hydroxyaryl oder gegebenenfalls mit Hydroxylgruppe(n), z.B. mit 1 bis 3 Hydroxylgruppen substituierte C₁-C₂₀-Alkylensulfonsäuren sowie deren Ammonium-, Alkali- oder Erdalkali-Salze
- R¹⁵ =: -(CH₂)ₙ- 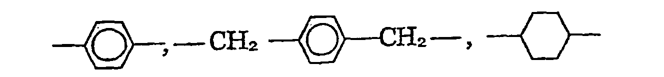 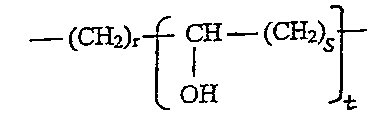 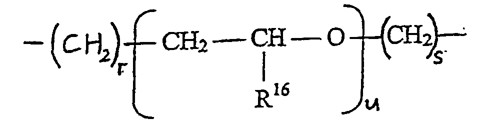
- X =: O, NH
- n =: 1 bis 6 darstellen
- r,s =: = 0 bis 5
- t =: 1 oder 2
- u =: 1 bis 50
und
R⁶ oben genannte Bedeutung besitzt.

Gemäß einer bevorzugten Ausführungsform weisen in den Formeln (IVa) und/oder (IVb) die C₁-C₂₀-Hydroxyalkyl-, C₇-C₂₀-Hydroxyalkylaryl- und C₆-C₁₀-Hydroxylaryl-Reste für R¹⁰ und R⁴ eine oder mehrere, z.B. 2 bis 5, insbesondere 2 bis 3 Hydroxylgruppen auf.

Außerdem stehen in der Formel (IVa) vorzugsweise R⁹ für Wasserstoff und R¹⁰ für einen C₁-C₁₆-Hydroxyalkyl- oder einen methyl- oder hydroxyl-terminierten Mono- oder Poly-C₂-C₃-Alkylenoxy-Rest.

Schließlich bedeuten in der Formel (IVb) R¹¹, R¹² und R¹³ vorzugsweise Wasserstoff sowie R¹⁴ vorzugsweise 2,3-Dihydroxypropyl, 3-Hydroxypropyl oder 2-Hydroxypropyl-3-sulfonsäure sowie deren Ammonium-, Alkali- und Erdalkali-Salze.

Bei den Monomeren, welche die Struktureinheit (IVa) bilden, sind Hydroxybutylvinylether, Diethylenglykolvinylether, Vinyloxobutylenpolyethylenglykol (hydroxy- oder alkylterminiert), 2-Aminoethylvinylether, Glycidylvinylether sowie Butyl- oder Isobutylvinylether als bevorzugt anzusehen.

Als Monomere, welche die Struktureinheit (IVb) bilden, werden bevorzugt 3-Allyloxy-2-hydroxypropan-1-sulfonsäure und deren Salze, 3-Allyloxy-1,2-p.ropandiol, Allylglycidylether, Allylethylether, 2-Allyloxyethanol sowie 1,1,1-Tris(hydroxymethylpropan)monoallylether eingesetzt.

Als Monomere, welche die Struktureinheit (IVc) bilden, kommen vorzugsweise Bis-acrylamide und Bis-acrylsäureester in Frage, die über eine Alkyiden-, Phenylen-, Benzyliden-, Cyclohexyliden-, Hydroxyalkylen- oder Oxyalkylen-Gruppe miteinander verbunden sind.

Es ist als erfindungswesentlich anzusehen, dass die Copolymere 5 bis 93 Gew.-% der Struktureinheiten a), 1 bis 50 Ge.-% der Struktureinheiten b), 5 bis 93 Gew.-% der Struktureinheiten c) sowie 1 bis 25 Gew.-% der Struktureinheiten d) enthalten, wobei sich die Komponenten a) bis d) zu 100' Gew.-% addieren.

Vorzugsweise verwendete Copolymere enthalten 40 bis 83 Gew.-% Struktureinheiten a), 5 bis 48 Gew.-% Struktureinheiten b), 5 bis 53 Gew.-%'Struktureinheiten c) und 1 bis 10 Gew.-% Struktureinheiten d), wobei sich a), b), c) und d) zu 100 Gew.-% ergänzen.

Die Anzahl der sich wiederholenden Struktureinheiten in den erfindungsgemäßen Copolymeren ist nicht eingeschränkt. Es hat sich allerdings als vorteilhaft erwiesen, die Anzahl der Struktureinheiten so einzustellen, dass die Copolymere ein Molekulargewicht von 10.000 bis 3.000.000 g/mol, insbesondere von 100.000 bis 1.000.000 g/mol, aufweisen.

Die erfindungsgemäßen Copolymere lassen sich durch eine Reihe von Polymerisationsverfahren herstellen. Zur Herstellung eignet sich die Polymerisation in Substanz, in Lösung, in inverser Emulsion sowie die Suspensionspolymerisation in organischer kontinuierlicher Phase, Fällungspolymerisation und Gelpolymerisation. Bevorzugt wird in Lösung polymerisiert oder durch Gelpolymerisation synthetisiert, besonders bevorzugt in Wasser als Lösemittel.

Die Erfindung betrifft somit auch ein Verfahren zur Herstellung der erfindungsgemäßen Copolymere bei dem man eine Polymerisation von Monomeren der Formel (la) und/oder (Ib) 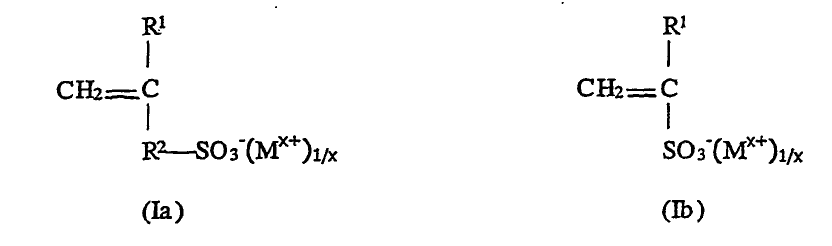 mit
- R¹ =: Wasserstoff oder C₁-C₅-Alkyl,
- R² =: C₁-C₂₀-Alkylen, Carboxy-C₁-C₂₀-Alkylen, Carboamido-C₁-C₂₀-Alkylen oder Phenylen
- M =: Wasserstoff, Ammonium oder einem ein-, zwei- oder dreiwertigen Metallkation
und
- x =: 1 bis 3, insbesondere in einer Menge von 5 bis 93 Gew.-%,
sowie der Formel (IIa) und/oder (IIb) 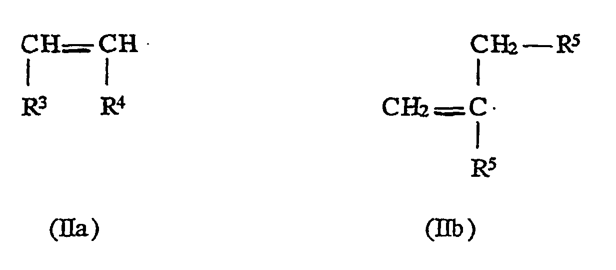 wobei
- R³ und R⁴ =: -COO⁻(M^{x+})_{1/x} oder zusammen 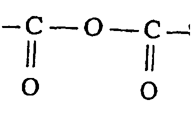 sind,
- R⁵ =: -COO-(M^{x+})_{1/x}
- M =: Wasserstoff, Ammonium oder einem ein-, zwei- oder dreiwertigen Metallkation
und
x = 1 bis 3, insbesondere in einer Menge von 1 bis 50 Gew.-% sowie
der Formel (III) 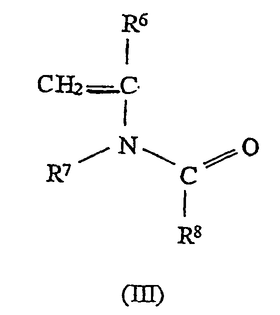 wobei
R⁶ = Wasserstoff oder C₁-C₅-Alkyl
R⁷ und R⁸ = Wasserstoff oder C₁-C₁₀-Alkyl oder zusammen -(CH₂)_{y}- sind
und
y = 3 bis 7, insbesondere in einer Menge von 5 bis 93 Gew.-%, sowie
der Formel (IVa) und/oder (IVb) und/oder (IVc), insbesondere in einer Menge von 1 bis 25 Gew.-% 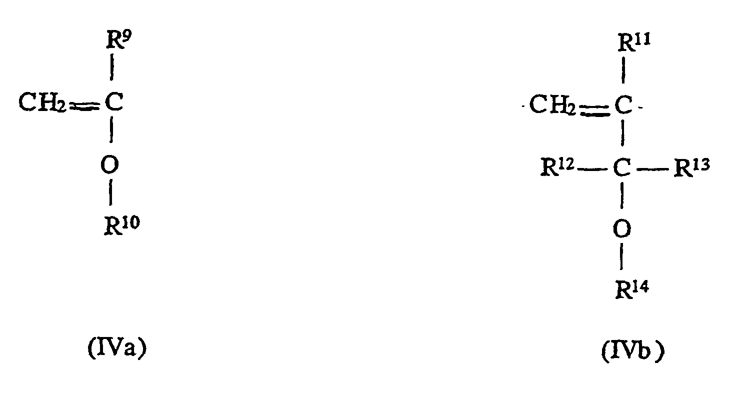 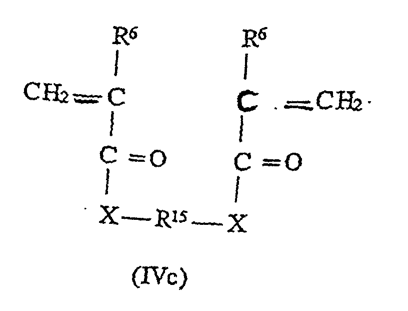 mit
R⁹ = Wasserstoff oder C₁-C₅-Alkyl
R¹⁰ = C₁-C₁₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-alkylenoxy (mit 1 bis 400 Alkylenoxyx-Einheiten), C₇-C₂₀-Alkylaryl, C₇-C₂₀-Hydroxyalkytaryl, C₆-C₁₀-Aryl, C₆-C₁₀-Hydroxyaryl
R¹¹, R¹² und R¹³ = Wasserstoff oder C₁-C₅-Alkyl und
R¹⁴ = Wasserstoff, C₁-C₂₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-Alkylenoxy (mit 1 bis 400 Alkylenoxy-Einheiten), C₇-C₂₀-Alkylaryl, C₇-C₂₀-Hydroxyalkylaryl, C₆-C₁₀-Aryl, C₆-C₁₀-Hydroxyaryl oder gegebenenfalls mit Hydroxylgruppe(n) substituierte C₁-C₂₀-Alkylensulfonsäuren sowie deren Ammonium-, Alkali- oder Erdalkali-Salze
R¹⁵ = -(CH₂)ₙ-, 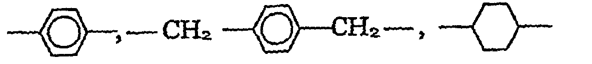 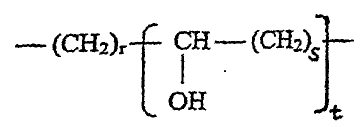 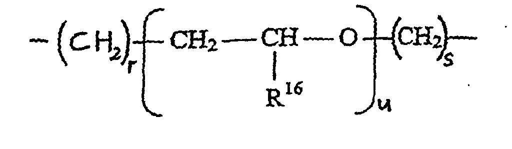 R¹⁶ = H, CH₃
- X =: O, NH
- n =: 1 bis 6
- r, s =: 0 bis 5
- t =: 1 oder 2
- u =: 1 bis 50
und
wobei R⁶ oben genannte Bedeutung besitzt,
in Substanz oder in Lösung bei Temperaturen von -5 bis 120°C durchführt.

Zur inversen Emulsionspolymerisation der erfindungsgemäßen Copolymere werden die Monomere in wässriger Phase gelöst und mit Hilfe eines Schutzkolloids in einem gängigen organischen Lösemittel, wie Cyclohexan, Toluol, Heptan, Petrolether oder Mineralöle emulgiert und mit Hilfe eines handelsüblichen, in organischen Lösemitteln löslichen Initiators wie Dibenzoylperoxid oder Azoisobutyronitril gestartet.

Die Suspensionspolymerisation in organischer kontinuierlicher Phase unterscheidet sich hinsichtlich der inversen Emulsionspolymerisation im gewählten Initiator, wobei ein wasserlösliches Initiatorsystem verwendet wird. Oft sind die dabei erhaltenen Polymerpartikel größer als in der inversen Emulsionspolymerisation.

Werden die erfindungsgemäßen Copolymere nach dem Verfahren der Fällungspolymerisation synthetisiert, so eignen sich als Lösemittel vor allem wasserlösliche C₁-C₅-Alkanole wie Methanol, Ethanol oder tert.-Butanol. Besonders letzteres ist aufgrund seiner geringen Übertragungskonstante bevorzugt, wenn Polymere mit großen Molekulargewicht hergestellt werden sollen. Während der Fällungspolymerisation präzipitiert das Polymer als Pulver und kann durch einfaches Abfiltrieren isoliert werden.

Sollen hohe Molekulargewichte erzielt werden, ist die Gelpolymerisation besonders gut geeignet. Hierbei wird das Monomer in einem Lösemittel gelöst, wobei der Monomergehalt der wässrigen Lösung meist 25 bis 75 Gew.-% beträgt. Durch Polymerisation entsteht ein hochmolekulares Gel, das anschließend zerkleinert und getrocknet werden kann.

Alle Polymerisationen werden in einem Temperaturbereich von -5 bis 120 °C gestartet. Bevorzugt wird eine Starttemperatur zwischen 5 und 90 °C. Die Reaktionen können unter Normaldruck oder erhöhtem Druck durchgeführt werden. Die Initiierung und Polymerisation in einer Schutzgasatmosphäre ist in einigen Fällen von Vorteil.

Die Polymerisation kann auf verschiedene Weise initiiert werden. Sie kann thermisch durch geeignete Initiatoren gestartet werden, wobei hierbei vorzugsweise Azoverbindungen eingesetzt werden. Ebenfalls möglich ist die Initiierung durch den photochemischen Zerfall geeigneter Initiatoren. Bevorzugt werden α-substituierte Carbonylverbindungen wie Benzoin- oder Benzilderivate eingesetzt. Diesen lichtsensitiven Initiatoren kann wahlweise ein Photosensibilisierer zugesetzt werden.

Viele Polymerisationsverfahren zur Herstellung der erfindungsgemäßen Copolymere führen zu hohen Molekulargewichten. Kleinere Molekulargewichte werden erhalten, wenn man der Reaktionslösung Substanzen mit großen Übertragungskonstanten zusetzt. Mehrfunktionelle Amine wie Tetraethylenpentamin, Alkohole wie Methanol, Ethanol oder Isopropanol und Mercaptane wie Mercaptoethanol sind hierbei bevorzugt. Die Verwendung von Allylethern als Comonomer resultiert ebenfalls in Produkten mit vergleichsweise geringen Molekulargewichten.

Je nach eingesetztem Verfahren können die Polymerisationen unterschiedlich stark exotherm verlaufen. Die Wärmeentwicklung zu Beginn der Polymerisation kann durch den Zusatz geeigneter Moderatoren reduziert werden, wobei hierfür bevorzugt Alkylamine verwendet werden.

Die erfindungsgemäßen Polymerverbindungen eignen sich hervorragend als Wasserretentionsmittel, Verdickungs- oder Antisegregationsmittel für wässrige Baustoffsysteme, die mineralische Bindemittel wie Zement, Kalk, Gips und Anhydrit usw. enthalten, oder für Tonsuspensionen vorzugsweise auf Basis von Bentonit.

Die bevorzugten Einsatzmengen der erfindungsgemäßen Copolymeren liegen hierbei in der Regel zwischen 0,05 bis 5 Gew.-% bezogen auf das Trockengewicht des eingesetzten Baustoffsystems.

Die erfindungsgemäßen Copolymere besitzen ausgezeichnete Wasserrückhalte-, Verdickungs- und Antisegregationseigenschaften, ohne hierbei die Ansteif- und Versteifungseigenschaften zu verlängern.

Die nachfolgenden Beispiele sollen die Erfindung näher erläutern.

### Beispiele

### Herstellungsbeispiele:

### Beispiel 1:

11,9 g Calciumhydroxid wurden in 200 g Leitungswasser suspendiert, 61,3 g AMPS sowie 3,2 g Maleinsäure-anhydrid zugegeben und der pH mit weiterem Calciumhydroxid auf 8 eingestellt. Anschließend wurden 7 g N-Vinylpyrrolidon und 1,6 g 3-Allyloxy-2,3-epoxypropan zugegeben, die Reaktionslösung wurde mit Stickstoff gespült und auf 50 °C erwärmt. Nach Zugabe von 0,3 g 2,2'-Azobis(N,N'-dimethylenisobutyramidin)dihydrochlorid wurde die Reaktion 3 Stunden bei 50 °C gerührt.

### Beispiel 2:

11,9 g Calciumhydroxid wurden in 200 g Leitungswasser suspendiert, 61,3 g AMPS und 1,6 g Maleinsäureanhydrid zugegeben und der pH-Wert mit weiterem Calciumhydroxid auf 6 eingestellt. Anschließend wurden 8,6 g N-Vinylcaprolactam zugegeben, die Reaktionslösung wurde mit Stickstoff gespült und auf 50 °C erwärmt. Nach Zugabe von 4,4 g Vinyloxybutylenpolyethylenglykol (MW ca. 500 g/mol) und 0,3 g 2,2'-Azo-bis(2-amidinopropan)dihydrochlorid wurde die Reaktion 3 Stunden bei 50 °C gerührt.

### Beispiel 3 (Gelpolymerisation):

14,34 g Natriumhydroxid wurden in 200 g Leitungswasser suspendiert, 61,3 g AMPS und 2,9 g Maleinsäureanhydrid zugegeben und der pH-Wert mit weiterem Natriumhydroxid auf 8 eingestellt. Anschließend wurden 15 g N-Vinylacetamid und 21,3 g N-Vinylformamid zugegeben, die Reaktionslösung wurde mit Stickstoff gespült und auf 55 °C erwärmt. Nach Zugabe von 4,6 g einer 40 %-igen Lösung von 3-Allyl-2-hydroxypropansulfonsäure Natriumsalz und 0,3 g 2,2 '-Azobis(2-amidinopropan)dihydrochlorid wurde die Reaktion 3 Stunden bei 55 °C stehen gelassen.

### Beispiel 4:

64 g Calciumhydroxid wurden in 800 g Leitungswasser suspendiert, 245 g AMPS und 23 g Maleinsäureanhydrid zugegeben und der pH mit weiterem Calciumhydroxid auf 8 eingestellt. Anschließend wurden 34 g N-Vinylcaprolactam zugegeben, die Reaktionslösung wurde mit Stickstoff gespült und auf 60 °C erwärmt. Nach Zugabe von 6 g Hydroxybutylvinylether und 1,2 g 2,2'-Azobis(2-amidinopropan)dihydrochlorid wurde die Reaktion 3 Stunden bei 60 °C gerührt.

### Beispiel 5:

11,6 g Calciumhydroxid wurden in 200 g Leitungswasser suspendiert, 61,3 g AMPS sowie 1,2 g Maleinsäureanhydrid zugegeben und der pH mit weiteren Calciumhydroxid auf 8 eingestellt. Anschließend wurden 25,8 g N-Vinylcaprolactam und 1,4 g Methylenbisacrylamid zugegeben, die Reaktionslösung wurde mit Stickstoff gespült und auf 62 °C erwärmt. Nach Zugabe von 0,6 g Tetraethylenpentamin und 0,85 g Natriumpersulfat wurde die Reaktion 3 Stunden bei 60 °C gerührt.

### Anwendungsbeispiele:

Die erfindungsgemäßen Copolymere wurden hinsichtlich ihrer Eignung als Antisegregations-, Verdickungs- und Wasserretentionsmittel für Gipsleime, Zementschlämmen und Tonsuspensionen untersucht.

### Beispiel 6:

Die Wirkung der erfindungsgemäßen Polymere als Antisegregationsmittel für Zementschlämmen wurde nach DIN EN 480-4 bestimmt. Hierzu wurden 1500 g Zement CEM I 42,5 R mit 900 g Leitungswasser und 7,5 g Polymer vermischt, 900 mL in einen Messzylinder abgefüllt, das Blutwasser nach bestimmten Zeiten abgezogen und dessen Masse in g bestimmt. Es wurden die folgenden akkumulierten Werte erhalten (Tabelle 1):

**Tabelle 1:**

| Blutwasserwerte für CEM I 42,5 R Zement (w/z = 0,6; 0,5 Gew.-% Polymer bezogen auf Zement) | | | |
|---|---|---|---|
| Polymer | Blutwasser (g) nach | | |
| | 10 min | 60 min | 120 min |
| - | 3,9 | 75,1 | 134,4 |
| 1 | 0,1 | 0,2 | 0,2 |
| 2 | 0,2 | 0,2 | 0,2 |
| 3 | 0,2 | 0,2 | 0,2 |
| 4 | 0,7 | 0,8 | 0,8 |

### Beispiel 7:

Die erfindungsgemäßen Polymere sind ebenfalls als Wasserretentionsmittel für Zementschlämmen geeignet. Das Wasserrückhaltevermögen der mit den erfindungsgemäßen Polymeren behandelten Zementschlämmen wurde nach DIN 18 555 bestimmt. 350 g CEM I 42,5 R Zement wurden mit 210 g Leitungswasser und 2,5 g Polymer vermischt und homogenisiert. Die erhaltenen Ergebnisse sind in Tabelle 2 dargestellt.

**Tabelle 2:**

| Wasserrückhaltevermögen der erfindungsgemäß beschriebenen Polymere in CEM I 42,5 R Zementschlämmen | |
|---|---|
| Polymer | Wasserrückhaltevermögen (%) |
| - | 64,8 |
| 1 | 98,2 |
| 2 | 98,4 |
| 3 | 99,0 |
| 4 | 97,8 |
| 5 | 89,5 |

### Beispiel 8:

Die Verdickungswirkung der erfindungsgemäßen Polymere von Zementschlämmen wurde mit Hilfe des Fließmaßes bestimmt. Als Referenz wurde eine handelsübliche Methylcellulose gewählt. Es wurden 0,75 g Polymer in 180 g Leitungswasser gelöst und anschließend 300 g Zement CEM 1 42,5 R zugegeben. Die Schlämme wurde 60 sec stehengelassen und danach 120 sec intensiv verrührt. Die Schlämme wurde in einen auf einer Glasplatte stehenden Vicat-Ring (H=40 mm, dₖₗₑᵢₙ = 65 mm, d_{groß} = 75 mm) randgleich eingegossen. Der Vicat-Ring wurde 2 cm angehoben und ca. 5 sec über der ausfließenden Schlämme gehalten. Der Durchmesser der ausgeflossenen Schlämme wurde an zwei zueinander senkrecht liegenden Achsen gemessen. Die Messung wurde einmal wiederholt. Das arithmetische Mittel aller vier Messwerte ergibt das Fließmaß. Die erhaltenen Werte sind in Tabelle 3 dargestellt.

**Tabelle 3:**

| Fließmaß der mit den erfindungsgemäßen Polymeren behandelten CEM 1 42,5 R Zementschlämmen | |
|---|---|
| Polymer | Fließmaß cm |
| - | 26,0 |
| Methylcellulose (Referenz) | 22,0 |
| 1 | 19,5 |
| 2 | 21,5 |
| 3 | 20,0 |
| 5 | 23,0 |

### Beispiel 9:

Die erfindungsgemäßen Polymere sind als Wasserretentionsmittel für Gipsleime geeignet. Das Wasserrückhaltevermögen der mit den erfindungsgemäßen Polymeren behandelten Gipsleime wurde nach DIN 18 555 bestimmt. 350 g β-Halbhydrat wurden mit 210 g Leitungswasser, 0,25 g Retardan®P (Verzögerer für Gipse der Firma Tricosal, Illertissen) und 2,5 g Polymer vermischt und homogenisiert. Die erhaltenen Ergebnisse wurden gegen eine handelsübliche Methylcellulose verglichen. Die Messergebnisse sind in Tabelle 4 dargestellt.

**Tabelle 4:**

| Wasserrückhaltevermögen der erfindungsgemäß beschriebenen Polymere in Gipsleimen | |
|---|---|
| Polymer | Wasserrückhaltevermögen (%) |
| - | 73,2 |
| Methylcellulose (Referenz) | 98,7 |
| 1 | 95,2 |
| 2 | 95,1 |
| 3 | 98,2 |

### Beispiel 10:

Die Verdickungswirkung der erfindungsgemäßen Polymere in Gipsleim wurde mit Hilfe eines FANN-Rotationsviskosimeters (r_{Rotor} = 1,8415 cm, r_{Stator} = 1,7245 cm, h_{Stator} = 3,800cm, d_{Ringspalt} = 0,1170 cm, Instrumentenkonstante K = 300,0 (Feder F1)) bestimmt. Als Referenz wurde eine handelsübliche Methylcellulose gewählt. Es wurden 0,25 g Retardan®P (Verzögerer für Gipse der Firma Tricosal, Illertissen) und 0,75 g Polymer in 245 g Leitungswasser gelöst und anschließend 350 g β-Halbhydrat eingerührt. Die Viskosität des Gipsleims wurde anschließend bei einem Schergradient y von 10.2 s⁻¹ gemessen. Die erhaltenen Werte sind in Tabelle 5 dargestellt.

**Tabelle 5:**

| Viskositäten der mit den erfindungsgemäßen Polymere in Gipsleim | | |
|---|---|---|
| Polymer | Schubspannung bei y = 10.2 s⁻¹ Pa | Viskosität bei y = 10.2 s⁻¹ mPas |
| - | 6,1 | 350 |
| Methylcellulose (Referenz) | 7,6 | 440 |
| 1 | 11,2 | 650 |
| 2 | 15,8 | 910 |
| 3 | 8,2 | 470 |

### Beispiel 11:

Die Verdickungswirkung der erfindungsgemäßen Polymere von Tonsuspensionen wurde mit Hilfe eines FANN-Rotationsviskosimeters (r_{Rotor} = 1,8415 cm, r_{Stator} = 1.7245 cm, h_{Stator} = 3,800cm, d_{Ringspalt} = 0,1170 cm, Instrumentenkonstante K = 300,0 (Feder F1)) bestimmt. Hierfür wurden 10,0 g Bentonit in 350 mL Leitungswasser suspendiert und anschließend 0,75 g Polymer zugegeben. Die Viskosität der Bentonitsuspension wurde anschließend bei einem Schergradientvon 10.2 s⁻¹ gemessen. Die erhaltenen Werte sind in Tabelle 6 dargestellt.

**Tabelle 6:**

| Polymer | Schubspannung bei y = 10.2 s⁻¹ Pa | Viskosität mPas |
|---|---|---|
| - | 0,5 | 29 |
| 1 | 1,0 | 60 |
| 2 | 1,0 | 60 |
| 3 | 1,5 | 90 |

### Beispiel 12:

Erstarrungsbeginn und Erstarrungsende wurden nach Vicat (DIN EN 196-3) bestimmt. Hierfür wurden 500 g Zement CEM I 42,5 R mit 210 g Leitungswasser und 2,5 g Polymer vermischt. Die Mischung wurde homogenisiert und die Zementschlämme anschließend vermessen. Als Referenz wurde eine handelsübliche Methylcellulose vermessen. Die ermittelten Erstarrungszeiten sind in Tabelle 7 dargestellt.

**Tabelle 7:**

| Erstarrungsbeginn und Erstarrungsende der mit den erfindungsgemäßen Polymeren behandelten Zementschlämmen bestimmt nach DIN EN 1 96-3 | | |
|---|---|---|
| Polymer | Erstarrungsbeginn (h : min) | Erstarrungsende (h : min) |
| - | 4:00 | 5:30 |
| Methylcellulose (Referenz) | 7:00 | 8:45 |
| 1 | 3:15 | 4:45 |
| 2 | 4:00 | 5:00 |
| 3 | 4:45 | 5:45 |
| 4 | 4:15 | 5:45 |

## Patentansprüche

1. Wasserlösliche Copolymere auf Basis von olefinischen Sulfonsäuren, **dadurch gekennzeichnet, dass** sie
a) 5 bis 93 Gew.-% Struktureinheiten der Formel (Ia) und/oder (Ib) 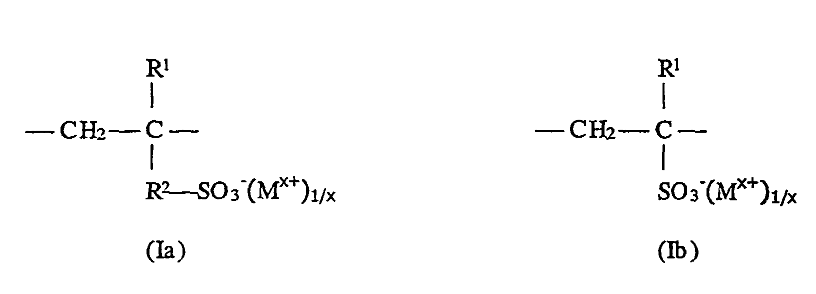 mit
R¹ = Wasserstoff oder C₁-C₅-Alkyl,
R² = C₁-C₂₀-Alkylen , Carboxy-C₁-C₂₀-Alkylen, Carboamido-C₁-C₂₀₋Akylen oder Phenylen
M = Wasserstoff, Ammonium oder einem ein-, zwei- oder dreiwertigen Metallkation
und
x = 1 bis 3
b) 1 bis 50 Gew.-% Struktureinheiten der Formel (IIa) und/oder (IIb) 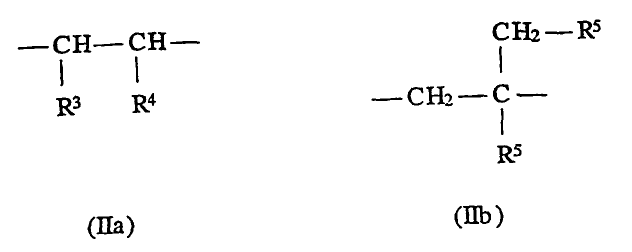 wobei
R³ und R⁴ = -COO- (M^{x+})_{1/x} oder zusammen 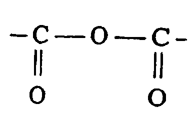 sind,
R5 = -COO⁻(M^{x+})_{1/x}
M = Wasserstoff, Ammonium oder einem ein-, zwei- oder dreiwertigen Metallkation
und
x = 1 bis 3
c) 5 bis 93 Gew.-% Struktureinheiten der Formel (III) 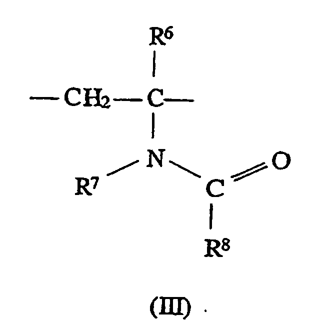 wobei
R⁶ = Wasserstoff oder C₁-C₅-Alkyl
R⁷ und R⁸ = Wasserstoff oder C₁-C₁₀-Alkyl oder zusammen -(CH₂)_{y}- sind sowie
y = 3 bis 7
sowie
d) 1 bis 25 Gew.-% Struktureinheiten der Formel (IVa) und/oder (IVb) und/oder (IVc) 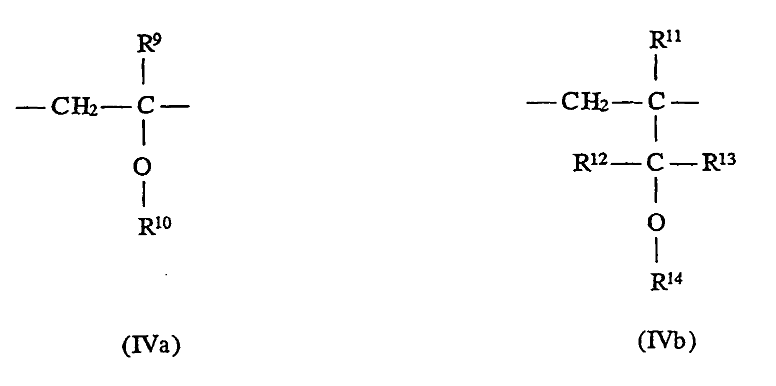 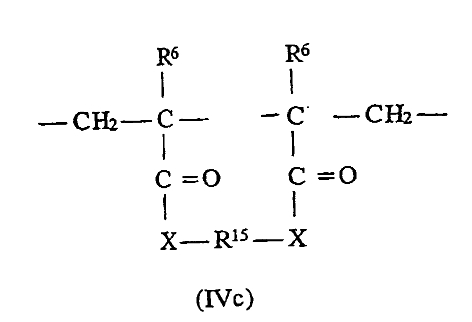 mit
R⁹ = Wasserstoff oder C₁-C₅-Alkyl
R¹⁰ = C₁-C₁₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-alkylenoxy (mit 1 bis 400 Alkylenoxy-Einheiten), C₇-C₂₀-Alkylaryl, C₇-C₂₀-Hydroxyalkylaryl, C₆-C₁₀-Aryl, C₆-C₁₀-Hydroxyaryl
R¹¹, R¹² und R¹³ = Wasserstoff oder C₁-C₅-Alkyl und
R¹⁴ = Wasserstoff, C₁-C₂₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-Alkylenoxy (mit 1 bis 400 Alkylenoxy-Einheiten), C₇-C₂₀-Alkylaryl, C₇-C₂₀-Hydroxyalkylaryl, C₆-C₁₀-Aryl, C₆-C₁₀-Hydroxyaryl oder gegebenenfalls mit Hydroxylgruppe(n) substituierte C₁-C₂₀-Alkylensulfonsäuren sowie deren Ammonium-, Alkali- oder Erdalkali-Salze
R¹⁵ = -(CH₂)ₙ-, 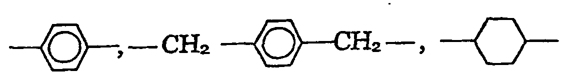 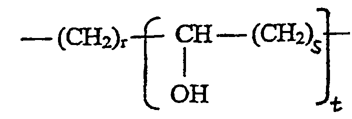 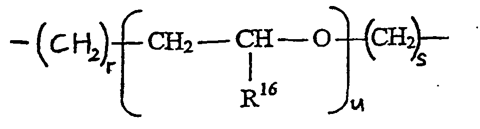
R¹⁶ = H, CH₃
X = O, NH
n = 1 bis 6
r,s = 0 bis 5
t = 1 oder 2
u = 1 bis 50
und
wobei R⁶ oben genannte Bedeutung besitzt,
enthalten und dass sich die Komponenten a) bis d) zu 100 Gew.-% addieren.

2. Copolymere nach Anspruch 1, **dadurch gekennzeichnet, dass** in Formel (Ia) R¹ = Wasserstoff und R² = -CO-NH-C(CH₃)₂-CH₂₋ bedeuten.

3. Copolymere nach einem der Ansprüche 1 oder/und 2, **dadurch gekennzeichnet, dass** in den Formeln (la), (Ib), (IIa) und (IIb) die einwertigen Metallkationen Alkali-lonen, insbesondere Natrium- und Kalium-Ionen, die zweiwertigen Metallkationen Erdalkali-Ionen, insbesondere Calcium- und Magnesium-Ionen, und die dreiwertigen Metallkationen Aluminium- oder Eisen-Ionen bedeuten.

4. Copolymere nach einem der Ansprüche 1 bis 3, **dadurch gekennzeichnet, dass** in Formel (III) y = 3 bis 5 bedeutet.

5. Copolymere nach einem der Ansprüche 1 bis 4, **dadurch gekennzeichnet, dass** in den Formeln (IVa) und/oder (IVb) die C₁-C₂₀-Hydroxyalkyl-, C₇-C₂₀-Hydroxyalkylaryl-, C₆-C₁₀-Hydroxylaryl-Reste für R¹⁰ und R¹⁴ eine oder mehrere Hydroxylgruppen aufweisen.

6. Copolymere nach einem der Ansprüche 1 bis 5, **dadurch gekennzeichnet, dass** in der Formel (IVa) R⁹ für Wasserstoff und R¹⁰ für einen C₁-C₆-Hydroxylalkyl- oder einen methyl- oder hydroxylterminierten Mono- oder Poly-C₂-C₃-Alkylenoxy-Rest stehen.

7. Copolymere nach einem der Ansprüche 1 bis 6, **dadurch gekennzeichnet, dass** in Formel (IVb) R¹¹, R¹² und R¹³ Wasserstoff sowie R¹⁴ 2,3-Dihydroxypropyl, 3-Hydroxypropyl oder 2-Hydroxypropyl-3-sulfonsäure sowie deren Ammonium-, Alkali- und Erdalkali-Salze bedeuten.

8. Copolymere nach einem der Ansprüche 1 bis 7, **dadurch gekennzeichnet, dass** sie 40 bis 83 Gew.-% Struktureinheiten a), 5 bis 48 Gew.-% Struktureinheiten b), 5 bis 53 Gew.-% Struktureinheiten c) und 1 bis 10 Gew.-% Struktureinheiten d) enthalten.

9. Copolymere nach einem der Ansprüche 1 bis 8, **dadurch gekennzeichnet, dass** sie ein Molekulargewicht von 10.000 bis 3.000.000 g/mol aufweisen.

10. Copolymere nach Anspruch 9, **dadurch gekennzeichnet, dass** das Molekulargewicht zwischen 100.000 g/mol und 1.000.000 g/mol liegt.

11. Verfahren zur Herstellung der Copolymere nach den Ansprüchen 1 bis 10, **dadurch gekennzeichnet, dass** man eine Polymerisation von Monomeren der Formel (Ia) und/oder (1b) 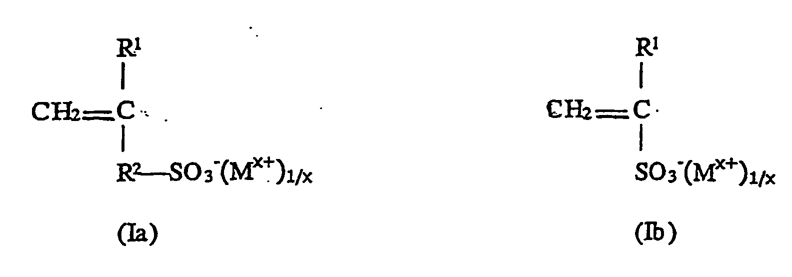 mit
R¹ = Wasserstoff oder C₁-C₅-Alkyl,
R² = C₁-C₂₀-Alkylen, Carboxy-C₁-C₂₀-Alkylen, Carboamido-C₁-C₂₀-Alkylen oder Phenylen
M = Wasserstoff, Ammonium oder einem ein-, zwei- oder dreiwertigen Metallkation
und
x = 1 bis 3
sowie der Formel (IIa) und/oder (IIb) 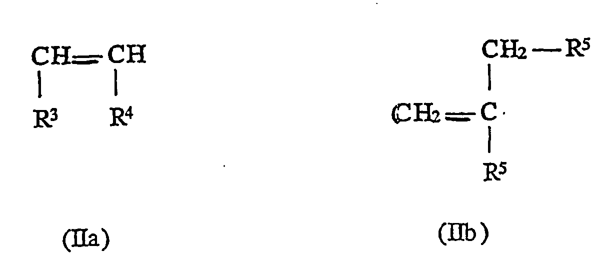 wobei
R³ und R⁴ = -COO⁻(M^{x+})_{1/x} oder zusammen 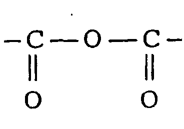 sind,
R⁵ = -COO⁻(M^{x+})_{1/x}
M = Wasserstoff, Ammonium oder einem ein-, zwei- oder dreiwertigen Metallkation
und
x = 1 bis 3
sowie
der Formel (III) 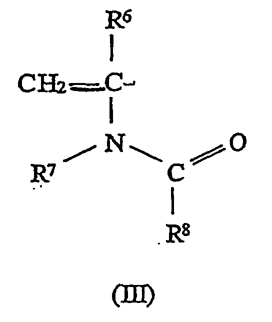 wobei
R⁶ = Wasserstoff oder C₁-C₅-Alkyl
R⁷ und R⁸ = Wasserstoff oder C₁-C₁₀-Alkyl oder zusammen -(CH₂)_{y}- sind
sowie
y = 3 bis 7
sowie
der Formel (IVa) und/oder (IVb) und/oder (IVc) 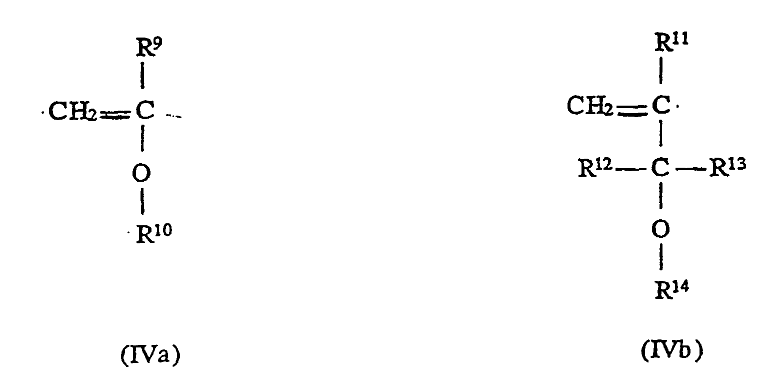 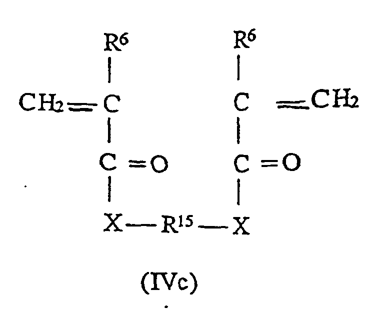 mit
R⁹ = Wasserstoff oder C₁-C₅-Alkyl
R¹⁰ = C₁-C₁₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-alkylenoxy (mit 1 bis 400 Alkylenoxyx-Einheiten), C₇-C₂₀-Alkylaryl, C₇-C₂₀-Hydroxyalkylaryl, C₆-C₁₀-Aryl, C₆-C₁₀-Hydroxyaryl
R¹¹, R¹² und R¹³ = Wasserstoff oder C₁-C₅-Alkyl und
R¹⁴ = Wasserstoff, C₁-C₂₀-Alkyl, C₁-C₁₀-Aminoalkyl, C₁-C₂₀-Hydroxyalkyl, C₁-C₄-Alkyl- oder hydroxylterminiertes Mono- oder Poly-C₂-C₃-Alkylenoxy (mit 1 bis 400 Alkylenoxy-Einheiten), C₇-C₂₀-Alkylaryl, C₇-C₂₀-Hydroxyalkylaryl, C₆-C₁₀-Aryl, C₆-C₁₀-Hydroxyaryl oder gegebenenfalls mit Hydroxylgruppe(n) substituierte C₁-C₂₀-Alkylensulfonsäuren sowie deren Ammonium-, Alkali- oder Erdalkali-Salze
R¹⁵ = -(CH₂)ₙ-, 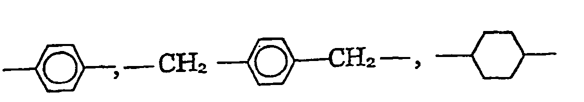 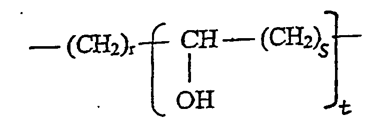 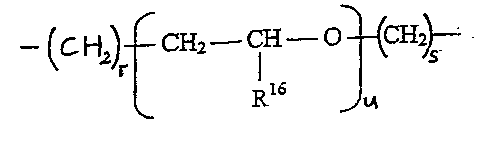
R¹⁶ = H, CH₃
X = O, NH
n = 1 bis 6
r,s = 0 bis 5
t = 1 oder 2
u = 1 bis 50
und
wobei R⁶ oben genannte Bedeutung besitzt,
in Substanz oder in Lösung bei Temperaturen von -5 bis 120°C durchführt.

12. Verfahren nach Anspruch 11, **dadurch gekennzeichnet, dass** man eine inverse Emulsionspolymerisation in einem organischen Lösemittel, ausgewählt aus der Gruppe Cyclohexan, Toluol, Heptan, Benzol, Petrolether oder Mineralöle in Gegenwart eines Schutzkolloids durchführt.

13. Verfahren nach Anspruch 11, **dadurch gekennzeichnet, dass** man eine Suspensionspolymerisation in kontinuierlicher organischer Phase mit Hilfe eines wasserlöslichen Initiatorsystems durchführt.

14. Verfahren nach Anspruch 11, **dadurch gekennzeichnet, dass** man eine Fällungspolymerisation mit einem wasserlöslichen C₁-C₅-Alkanol als Lösemittel durchführt.

15. Verfahren nach Anspruch 11, **dadurch gekennzeichnet, dass** man eine Gelpolymerisation durchführt, wobei der Monomergehalt der wässrigen Lösung 25 bis 75 Gew.-% beträgt.

16. Verwendung der Copolymere nach den Ansprüchen 1 bis 10 als Wasserretentionsmittel, Verdickungsmittel oder Antisegregationsmittel für wässrige Baustoffsysteme, die mineralische Bindemittel enthalten, oder für Tonsuspensionen.

17. Verwendung nach Anspruch 16, **dadurch gekennzeichnet, dass** sie in einer Menge von 0,05 bis 5 Gew.-%, bezogen auf das Trockengewicht des Baustoffsystems eingesetzt werden.

## Claims

1. Water-soluble copolymers based on olefinic sulphonic acids, **characterized in that** they contain
a) 5 to 93 wt.-% structural units of formula (Ia) and/or (Ib) 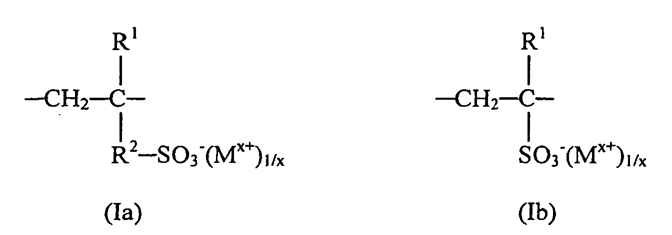 in which
R¹ = hydrogen or C₁-C₅ alkyl,
R² = C₁-C₂₀ alkylene, carboxy-C₁-C₂₀-alkylene, carboamido-C₁-C₂₀-alkylene or phenylene
M = hydrogen, ammonium or a monovalent, divalent or trivalent metal cation
and
x = 1 to 3
b) 1 to 50 wt.-% structural units of formula (IIa) and/or (IIb) 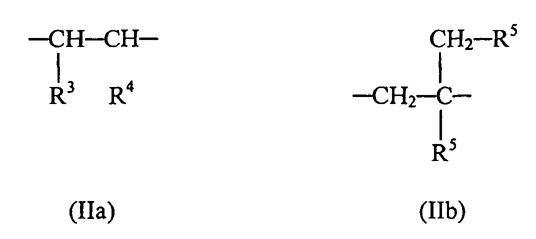 in which
R³ and R⁴ = -COO⁻(M^{x+})_{1/x} or are together 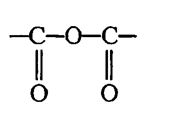 R⁵ = -COO⁻(M^{x+})_{1/x}
M = hydrogen, ammonium or a monovalent, divalent or trivalent metal cation
and
x = 1 to 3
c) 5 to 93 wt.-% structural units of formula (III) 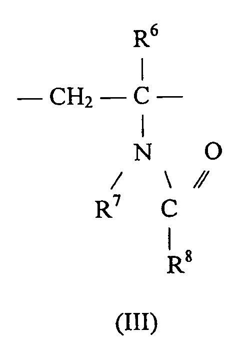 in which
R⁶ = hydrogen or C₁-C₅ alkyl
R⁷ and R⁸ = hydrogen, C₁-C₁₀ alkyl or are together -(CH₂)_{y}- and
y = 3 to 7
d) 1 to 25 wt.-% structural units of formula (IVa) and/or (IVb) and/or (IVc) 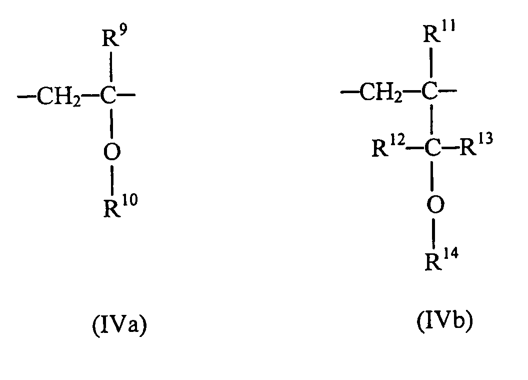 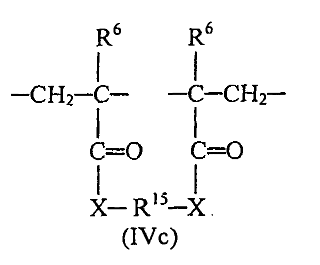
in which
R⁹ = hydrogen or C₁-C₅ alkyl
R¹⁰ = C₁-C₁₀ alkyl, C₁-C₁₀ aminoalkyl, C₁-C₂₀ hydroxyalkyl, C₁-C₄ alkyl- or hydroxyl-terminated mono- or poly-C₂-C₃-alkyleneoxy (containing 1 to 400 alkyleneoxy units), C₇-C₂₀ alkylaryl, C₇-C₂₀ hydroxyalkylaryl, C₆-C₁₀ aryl, C₆-C₁₀ hydroxyaryl
R¹¹, R¹² and R¹³ = hydrogen or C₁-C₅ alkyl and
R¹⁴ = hydrogen, C₁-C₂₀ alkyl, C₁-C₁₀ aminoalkyl, C₁-C₂₀ hydroxyalkyl, C₁-C₄ alkyl- or hydroxyl-terminated mono- or poly-C₂-C₃-alkyleneoxy (containing 1 to 400 alkyleneoxy units), C₇-C₂₀ alkylaryl, C₇-C₂₀ hydroxyalkylaryl, C₆-C₁₀ aryl, C₆-C₁₀ hydroxyaryl or C₁-C₂₀ alkylenesulfonic acids optionally substituted with hydroxyl group(s) and ammonium, alkali or alkaline earth salts thereof
R¹⁵ = -(CH₂)ₙ-, 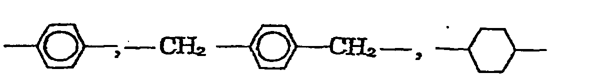 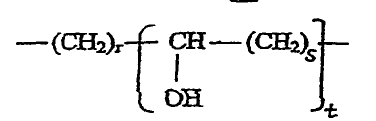 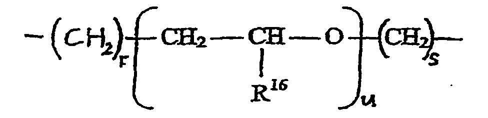
R¹⁶ = H, CH₃
X= O, NH
n = 1 to 6
r, s = 0 to 5
t = 1 or 2
u = 1 to 50
and
R⁶ has the above-mentioned meaning
and that the components a) to d) add up to 100 wt.%.

2. Copolymers as claimed in claim 1, **characterized in that** R¹ = hydrogen and R² = -CO-NH-C(CH₃)₂-CH₂- in formula (Ia).

3. Copolymers as claimed in one of the claims 1 or/and 2, **characterized in that** in formulae (Ia), (Ib), (IIa) and (IIb) the monovalent metal cations denote alkali ions and in particular sodium and potassium ions, the divalent metal cations denote alkaline earth ions and in particular calcium and magnesium ions and the trivalent metal cations denote aluminium or iron ions.

4. Copolymers as claimed in one of the claims 1 to 3, **characterized in that** y = 3 to 5 in formula (III).

5. Copolymers as claimed in one of the claims 1 to 4, **characterized in that** in formulae (IVa) and/or (1Vb) the C₁-C₂₀ hydroxyalkyl, C₇-C₂₀ hydroxyalkylaryl, C₆-C₁₀ hydroxylaryl residues for R¹⁰ and R¹⁴ have one or more hydroxyl groups.

6. Copolymers as claimed in one of the claims 1 to 5, **characterized in that** in formula (IVa) R⁹ denotes hydrogen and R¹⁰ denotes a C₁-C₆ hydroxyalkyl or a methyl-terminated or hydroxyl-terminated mono- or poly-C₂-C₃-alkyleneoxy residue.

7. Copolymers as claimed in one of the claims 1 to 6, **characterized in that** in formula (IVb) R¹¹, R¹² and R¹³ denote hydrogen and R¹⁴ denotes 2,3-dihydroxypropyl, 3-hydroxypropyl or 2-hydroxypropyl-3-sulphonic acid as well as ammonium, alkali and alkaline earth salts thereof.

8. Copolymers as claimed in one of the claims 1 to 7, **characterized in that** they contain 40 to 83 wt.-% structural units a), 5 to 48 wt.-% structural units b), 5 to 53 wt.-% structural units c) and 1 to 10 wt.-% structural units d).

9. Copolymers as claimed in one of the claims 1 to 8, **characterized in that** they have a molecular weight of 10,000 to 3,000,000 g/mol.

10. Copolymers as claimed in claim 9, **characterized in that** the molecular weight is between 100,000 g/mol and 1,000,000 g/mol.

11. Process for producing the copolymers as claimed in one of the claims 1 to 10, **characterized in that** monomers of formula (Ia) and/or (Ib) 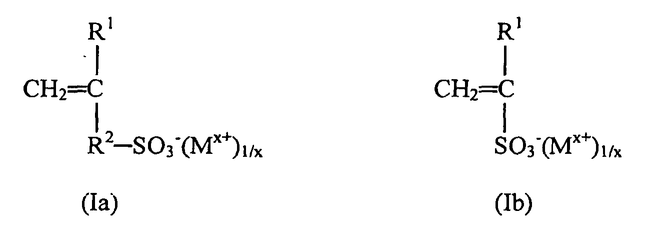 in which
R¹ = hydrogen or C₁-C₅ alkyl,
R² = C₁-C₂₀ alkylene, carboxy-C₁-C₂₀-alkylene, carboamido-C₁-C₂₀-alkylene or phenylene
M = hydrogen, ammonium or a monovalent, divalent or trivalent metal cation
and
x = 1 to 3,
and of formula (IIa) and/or (IIb) 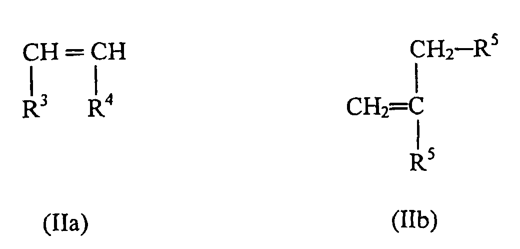 in which
R³ and R⁴ = -COO⁻(M^{x+})_{1/x} or are together 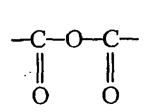 R⁵ =-COO⁻(M^{x+})_{1/x}
M = hydrogen, ammonium or a monovalent, divalent or trivalent metal cation
and
x = 1 to 3,
and
of formula (III) 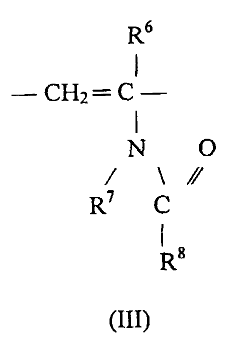 in which
R⁶ = hydrogen or C₁-C₅ alkyl
R⁷ and R⁸ = hydrogen or C₁-C₁₀ alkyl or are together -(CH₂)_{y}-
and
y = 3 to 7,
and
of formula (IVa) and/or (IVb) and/or (IVc), 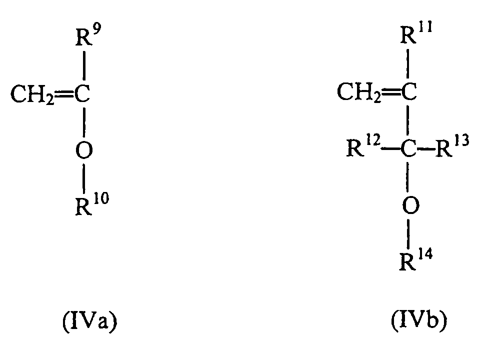 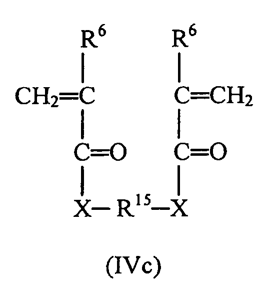 in which
R⁹ = hydrogen or C₁-C₅ alkyl
R¹⁰ = C₁-C₁₀ alkyl, C₁-C₁₀ aminoalkyl, C₁-C₂₀ hydroxyalkyl, C₁-C₄ alkyl- or hydroxyl-terminated mono- or poly-C₂-C₃-alkyleneoxy (containing 1 to 400 alkyleneoxy units), C₇-C₂₀ alkylaryl, C₇-C₂₀ hydroxyalkylaryl, C₆-C₁₀ aryl, C₆-C₁₀ hydroxyaryl
R¹¹, R¹² and R¹³ = hydrogen or C₁-C₅ alkyl and
R¹⁴ = hydrogen, C₁-C₂₀ alkyl, C₁-C₁₀ aminoalkyl, C₁-C₂₀ hydroxyalkyl, C₁-C₄ alkyl- or hydroxyl-terminated mono- or poly-C₂-C₃-alkyleneoxy (containing 1 to 400 alkyleneoxy units), C₇-C₂₀ alkylaryl, C₇-C₂₀ hydroxyalkylaryl, C₆-C₁₀ aryl, C₆-C₁₀ hydroxyaryl or C₁-C₂₀ alkylenesulphonic acids optionally substituted with hydroxyl group(s) and ammonium, alkali or alkaline earth salts thereof
R¹⁵ = -(CH₂)ₙ 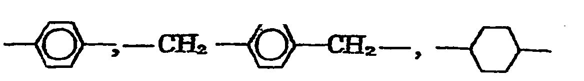 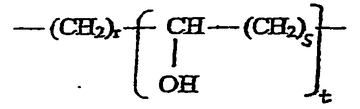 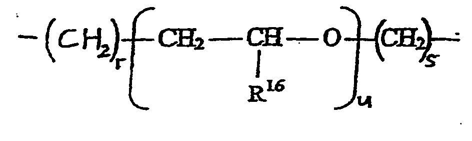
R¹⁶ = H, CH₃
X = O, NH
n = 1 to 6
r, s = 0 to 5
t = 1 or 2
u = 1 to 50
and
R⁶ has the above-mentioned meaning,
are polymerized in bulk or in solution at temperatures of -5 to 120°C.

12. Process as claimed in claim 11, **characterized in that** an inverse emulsion polymerization is carried out in an organic solvent selected from the group comprising cyclohexane, toluene, heptane, benzene, petroleum ether or mineral oils in the presence of a protective colloid.

13. Process as claimed in claim 11, **characterized in that** a suspension polymerization is carried out in a continuous organic phase with the aid of a water-soluble initiator system.

14. Process as claimed in claim 11, **characterized in that** a precipitation polymerization is carried out using a water-soluble C₁-C₅ alkanol as a solvent.

15. Process as claimed in claim 11, **characterized in that** a gel polymerization is carried out in which the amount of monomer in the aqueous solution is 25 to 75 % by weight.

16. Use of copolymers as claimed in claims 1 to 10 as water retention agents, thickeners or anti-segregation agents for aqueous building material systems which contain mineral binders, or for clay suspensions.

17. Use as claimed in claim 16, **characterized in that** they are used in an amount of 0.05 to 5 % by weight based on the dry weight of the building material system.

## Revendications

1. Copolymères hydrosolubles à base d'acides sulfoniques oléfiniques, **caractérisés en ce qu'**ils contiennent
a) 5 à 93% en poids d'unités structurelles de formule (Ia) et/ou (Ib) 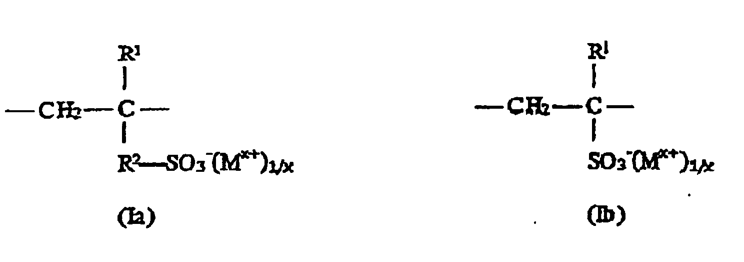 avec
R¹ = Hydrogène ou alkyle en C₁-C₅
R² = Alkylène en C₁-C₂₀, carboxy-alkylène en C₁-C₂₀, carbamido-alkylène en C₁-C₂₀ ou phénylène
M = Hydrogène, ammonium ou un cation métallique mono-, bi- ou trivalent
et
x = 1 à 3
b) 1 à 50% en poids d'unités structurelles de formule (IIa) et/ou (IIb) 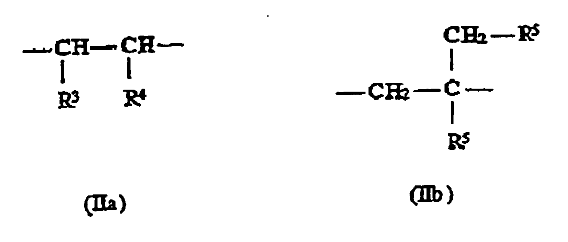 dans lesquelles
R³ et R⁴ *=* -COO⁻(M^{x+})_{1/x} ou forment ensemble 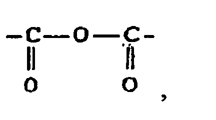 R⁵ = COO⁻(M^{x+})_{1/x}
M = Hydrogène, ammonium ou un cation métallique mono-, bi- ou trivalent
et
x = 1 à 3
c) 5 à 93% en poids d'unités structurelles de formule (III) 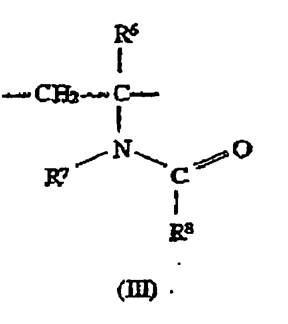 dans lesquelles
R⁶ = Hydrogène ou alkyle en C₁-C₅
R⁷ et R⁸ = Hydrogène ou alkyle en C₁-C₁₀ ou forment ensemble -(CH₂)_{y}- et
y =3 à 7
ainsi que
d) 1 à 25% en poids d'unités structurelles de formule (IVa) et/ou (IVb) et/ou (IVc) 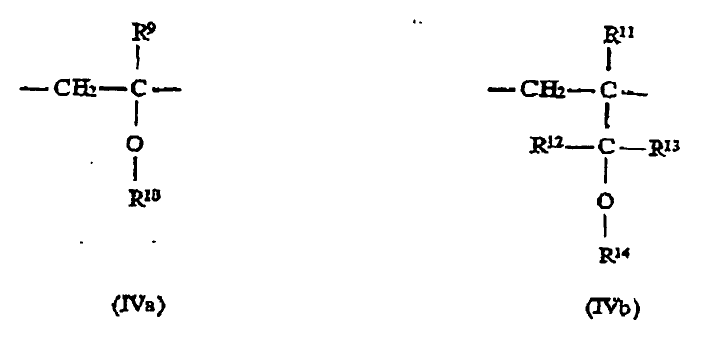 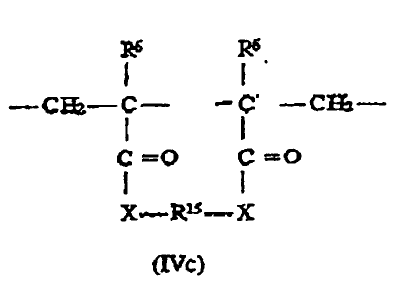 avec
R⁹ = Hydrogène ou alkyle en C₁-C₅
R¹⁰ = alkyle en C₁-C₁₀, aminoalkyle en C₁-C₁₀, hydroxyalkyle en C₁-C₂₀, mono ou polyoxyalkylène en C₂-C₃ (avec 1 à 400 unités oxyalkylènes) terminé par un alkyle en C₁-C₄ ou un hydroxyle, alkylaryle en C₇-C₂₀, hydroxyalkylaryle en C₇-C₂₀, aryle en C₆-C₁₀, hydroxyaryle en C₆-C₁₀
R¹¹, R¹² et R¹³ = hydrogène ou alkyle en C₁-C₅, et
R¹⁴ = hydrogène, alkyle en C₁-C₂₀, aminoalkyle en C₁-C₁₀, hydroxyalkyle en C₁-C₂₀, mono ou polyoxyalkylène en C₂-C₃ (avec 1 à 400 unités oxyalkylènes) terminé par un alkyle en C₁-C₄ ou un hydroxyle, alkylaryle en C₇-C₂₀, hydroxyalkylaryle en C₇-C₂₀, aryle en C₆-C₁₀, hydroxyaryle en C₆-C₁₀ ou le cas échéant acides alkylène-sulfoniques en C₁-C₂₀ substitués avec un(des) groupe(s) hydroxyle(s) ainsi que leur sels d'ammonium, d'alcalins ou d'alcalinoterreux
R¹⁵ = -(CH₂)ₙ-, 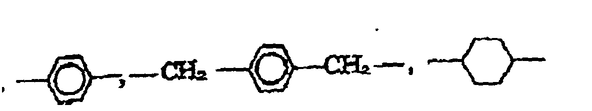 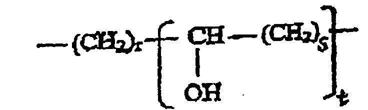 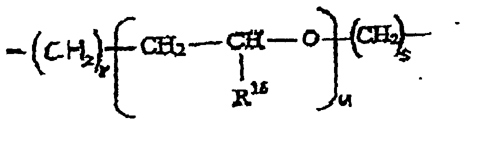
R¹⁶ = H, CH₃
x = O, NH,
n = 1 à 6
r, s = 0 à 5
t= 1 ou 2
u = 1 à 50
et
dans lesquelles R⁶ a la signification indiquée ci-dessus,
et **en ce que** les composants a) à d) s'ajoutent pour donner 100% en poids.

2. Copolymères selon la revendication 1, **caractérisés en ce que**, dans la formule (Ia) R¹ = hydrogène et R² = -CO-NH-C(CH₃)₂-CH₂-.

3. Copolymères selon l'une des revendications 1 ou/et 2, **caractérisés en ce que**, dans les formules (Ia), (Ib), (IIa) et (IIb), les cations métalliques monovalents représentent des ions alcalins, notamment des ions de sodium et de potassium, les cations métalliques bivalents représentent des ions alcalinoterreux, notamment des ions de calcium et de magnésium, et les cations métalliques trivalents représentent des ions métalliques d'aluminium ou de fer.

4. Copolymères selon l'une des revendications 1 à 3, **caractérisés en ce que**, dans la formule (III), y = 3 à 5.

5. Copolymères selon l'une des revendications 1 à 4, **caractérisés en ce que**, dans les formules (IVa) et/ou (IVb), pour R¹⁰ et R¹⁴, les radicaux hydroxyalkyle en C₁-C₂₀, hydroxyalkylaryle en C₇-C₂₀, hydroxyaryle en C₆-C₁₀ présentent un ou plusieurs groupes hydroxyle.

6. Copolymères selon l'une des revendications 1 à 5, **caractérisés en ce que**, dans la formule (IVa), R⁹ représente un hydrogène et R¹⁰ un radical hydroxyalkyle en C₁-C₆ ou un mono ou polyalkylènoxy en C₂-C₃ terminé par un méthyle ou un hydroxyle.

7. Copolymères selon l'une des revendications 1 à 6, **caractérisés en ce que**, dans la formule (IVb), R¹¹, R¹² et R¹³ représentent un hydrogène et que R¹⁴ représente l'acide 2,3-dihydroxypropyl-, 3-hydroxypropyl- ou 2-hydroxypropyl-3-sulfonique ainsi que leurs sels d'ammonium, d'alcalins et d'alcalinoterreux.

8. Copolymères selon l'une des revendications 1 à 7, **caractérisés en ce qu'**ils contiennent 40 à 83% en poids d'unités structurelles a), 5 à 48% en poids d'unités structurelles b), 5 à 53% en poids d'unités structurelles c) et 1 à 10% en poids d'unités structurelles d).

9. Copolymères selon l'une des revendications 1 à 8, **caractérisés en ce qu'**ils présentent un poids moléculaire de 10 000 à 3 000 000 g/mol.

10. Copolymères selon la revendication 9, **caractérisés en ce que** le poids moléculaire est compris entre 100 000 g/mol et 1 000 000 g/mol.

11. Procédé de fabrication des copolymères selon les revendications 1 à 10, **caractérisé en ce qu'**on effectue une polymérisation des monomères de formule (Ia) et/ou (Ib) 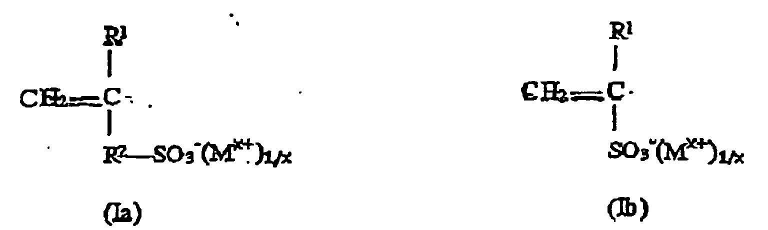 avec
R¹ = Hydrogène ou alkyle en C₁-C₅
R² = Alkylène en C₁-C₂₀, carboxy-alkylène en C₁-C₂₀, carbamido-alkylène en C₁-C₂₀ ou phénylène
M = Hydrogène, ammonium ou un cation métallique mono-, bi- ou trivalent
et
x = 1 à 3
ainsi que de formule (IIa) et/ou (IIb) 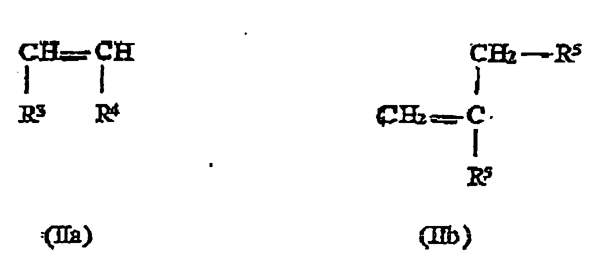 dans lesquelles
R³ et R⁴ = -COO⁻(M^{x+})_{1/x} ou forment ensemble 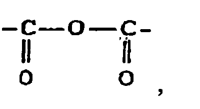 R⁵ = -COO-(M^{x+)}_{1/x}
M = Hydrogène, ammonium ou un cation métallique mono-, bi- ou trivalent
et
x = 1 à 3
ainsi que de formule (III) 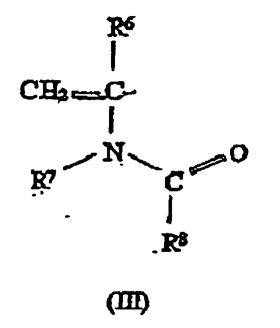 dans laquelle
R⁶ = Hydrogène ou alkyle en C₁-C₅
R⁷ et R⁸= Hydrogène ou alkyle en C₁-C₁₀ ou forment ensemble -(CH₂)_{y}- et
y = 3 à 7
ainsi que de formule (IVa) et/ou (IVb) et/ou (IVc) 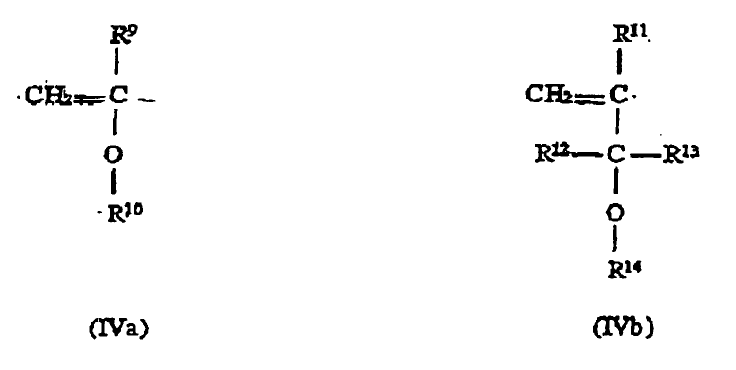 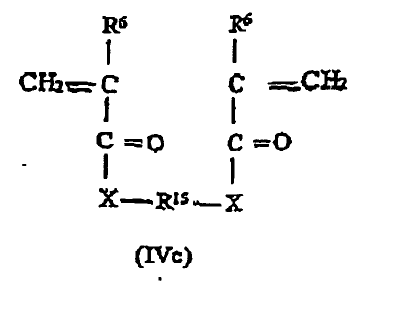 avec
R⁹ = Hydrogène ou alkyle en C₁-C₅
R¹⁰ = alkyle en C₁-C₁₀, aminoalkyle en C₁-C₁₀, hydroxyalkyle en C₁-C₂₀, mono ou polyoxyalkylène en C₂-C₃ (avec 1 à 400 unités oxyalkylènes) terminé par un alkyle en C₁-C₄ ou un hydroxyle, alkylaryle en C₇-C₂₀, hydroxyalkylaryle en C₇-C₂₀, aryle en C₆-C₁₀ hydroxyaryle en C₆-C₁₀
R¹¹, R¹² et R¹³ = hydrogène ou alkyle en C₁-C₅, et
R¹⁴ = hydrogène, alkyle en C₁-C₂₀, aminoalkyle en C₁-C₁₀, hydroxyalkyle en C₁-C₂₀, mono ou polyoxyalkylène en C₂-C₃ (avec 1 à 400 unités oxyalkylènes) terminé par un alkyle en C₁-C₄ ou un hydroxyle, alkylaryle en C₇-C₂₀, hydroxyalkylaryle en C₇-C₂₀, aryle en C₆-C₁₀, hydroxyaryle en C₆-C₁₀ ou le cas échéant acides alkylène-sulfoniques en C₁-C₂₀ substitués avec un(des) groupe(s) hydroxyle(s) ainsi que leur sels d'ammonium, d'alcalins ou d'alcalinoterreux
R¹⁵ = -(CH₂)ₙ-, 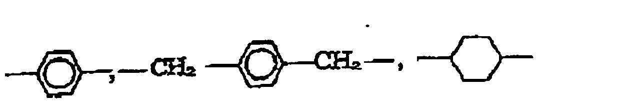 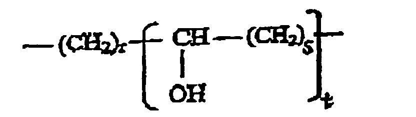 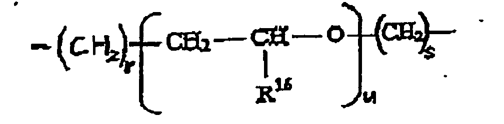
R¹⁶ = H, CH₃
X = O, NH,
n= 1 à 6
r, s = 0 à 5
t = 1 ou 2
u = 1 à 50
et
où R⁶ a la signification indiquée ci-dessus,
dans la masse ou en solution, à des températures de -5 à 120°C.

12. Procédé selon la revendication 11, **caractérisé en ce qu'**on effectue une polymérisation en émulsion inverse dans un solvant organique choisi dans le groupe cyclohexane, toluène, heptane, benzène, éther de pétrole ou huiles minérales, en présence d'un colloïde protecteur.

13. Procédé selon la revendication 11, **caractérisé en ce qu'**on effectue une polymérisation en suspension en phase organique continue à l'aide d'un système d'initiateurs hydrosoluble.

14. Procédé selon la revendication 11, **caractérisé en ce qu'**on effectue une polymérisation par précipitation avec comme solvant un alcanol en C₁-C₅ hydrosoluble.

15. Procédé selon la revendication 11, **caractérisé en ce qu'**on effectue une polymérisation gel dans laquelle la teneur en monomère de la solution aqueuse est de 25 à 75% en poids.

16. Utilisation des copolymères selon les revendications 1 à 10 comme agent de rétention d'eau, épaississant ou agent anti-ségrégation pour les systèmes de matériaux de construction aqueux qui contiennent des liants minéraux, ou pour les suspensions argileuses.

17. Utilisation selon la revendication 16, **caractérisée en ce qu'**elle est mise en oeuvre dans une quantité de 0,05 à 5% en poids par rapport au poids sec du système de matériaux de construction.
